# EUROPEAN PATENT SPECIFICATION

(11) **EP 2 594 138 B1**
(45) Date of publication and mention of the grant of the patent: **16.03.2016**
(21) Application number: 11380093.2
(22) Date of filing: 17.11.2011
(51) Int. Cl.: A23G 3/00, A23G 3/54, A23G 3/42, A23G 3/02, A23G 4/20

(54) **Extruded crunchy confectionary**
Stranggepresstes knuspriges Konfekt
Confiserie croquante extrudée

(43) Date of publication of application: 22.05.2013
(73) Proprietor: WM. Wrigley Jr. Company, Chicago, IL 60622 (US)
(72) Inventor: Bordera Verdú, Luis, Hinsdale, IL 60521 (US); Bill Popa, Lavinel, Chicago, IL 60634 (US); Rene Yah, Julie, Chicago, IL 60614 (US); Romero Carcasona, Emilio, 08192 Sant Quirze del Valles Barcelona (ES); Fabre, Juan, 08190 San Cugat del Valles (Barcelona) (ES); Blazquez, Melchor, 08912 Badalona (Barcelona) (ES); Garrett Brown, Scott, Oswego, IL 60543 (US)
(74) Representative: Campbell, Neil Boyd

(56) References cited:
- EP-A2- 1 757 193
- WO-A1-2008/114013
- WO-A2-2004/106273
- WO-A2-2011/026003
- JP-A- 2005 333 946
- JP-A- 2006 254 906
- US-A- 4 640 717
- US-A- 5 362 505
- US-A1- 2007 048 418
- US-A1- 2007 259 070
- US-A1- 2008 305 231

## Description

### FIELD OF THE INVENTION

The present invention relates to a process for making confectionary products that comprise at least one crunchy confection layer and the related confectionary products.

### BACKGROUND OF THE INVENTION

Consumers have indulged in different forms of confections for hundreds of years and candy making has changed to meet the needs and desires of the consumers, as well as the demands on the candy making industry. Consumers like confectionary products with a unique chewing experience, such as with a new texture or a combination of textures, and their resulting release of sweetness and flavors to the mouth.

One such unique chewing experience is when a confection piece breaks into many small pieces, that is, shatters, when chewed because the confection is hard and brittle. An advantage of this shattering is that it creates both tactile and sound sensations, that is, a crunchiness. Another advantage of this shattering is that the many small pieces give a unique texture in the mouth. The small pieces quickly dissolve because of their increased surface area, which creates a burst of flavor and sweetness as ingredients are released from the confection mass.

Consumers like hard and brittle and crunchy confections, though currently consumers will find that type of confection always combined with a second confection layer. Such crunchy confections are created by building a crystalline confection structure onto a starting layer. This starting layer (such as a chewing gum piece) gives a surface upon which supersaturated, or molten confection material can be applied, and then that confection material at least partially crystallizes.

A unique combination of textures occurs when this hard and brittle and crunchy textured layer is combined with a softer, chewy textured layer. This form is liked by consumers because the combination of more than one texture can lead to the delivery of more than one physical sensation, along with more than one flavor, sweetness, and/or sensate experience. For example, center filled lollipops have a glass (i.e., boiled, amorphous) hard outer layer and a chewing gum center layer. If this confection is sucked, the consumer will perceive a two stage delivery of flavor, sweetness, and sensates (such as, for example, tingling, cooling, or warming sensates) such that as one layer dissolves, one set of ingredients is released or experienced by the consumer, and then as the center layer is chewed a second set of ingredients delivers another experience to the consumer. Flavor, sweetness, and sensates may be delivered to the mouth differently with each type of layer. For example, a lollipop containing a chewing gum center layer, may deliver a first set of ingredients from the hard confection portion slowly since the flavors, sweeteners, and sensates are trapped in the confection glass matrix and the confection must dissolve before the ingredients are release. A second set of ingredients may then be released as the chewing gum center layer is chewed. This two stage delivery may occur even if the two layer confection is chewed (both the hard confection portion and the chewy center portion) as the delivery of flavors, sweeteners, and sensates varies due to the different solubilities with each layer. For example, if the outer confection layer is a glassy shell, the flavors, sweeteners, and sensates may deliver slower than from a chewing gum center. Moreover, if the outer confection layer is a brittle pan coating, the flavors, sweeteners, and sensates may deliver faster than from a chewing gum center. In general, brittle confection layers break into numerous small pieces during chewing, which increases the rate of dissolving due to increased surface area.

Consumers have shown a liking for confection products where the outer layer is a crunchy confection and the center layer is a chewy confection. For example, Eclipse® chewing gum pellets have a crunchy pan coated outer layer and a chewing gum center layer. A crunchy confection may be characterized as being both hard and brittle, such that the consumer can feel and hear the sound of this layer breaking-up as the product is chewed, that is, they can hear and feel a "crunch". When chewed by a consumer, a crunchy confection layer tends to not just break cleanly when teeth pass through it, but to break (i.e., shatter) into much smaller pieces because the confection layer is brittle. The smaller pieces may then dissolve more quickly so as to give a first delivery of ingredients before being combined with the second delivery of ingredients from the chewy center layer.

In general, brittleness is the result of the creation of an array of sweetener crystals in a confection layer such that the layer contains numerous weaknesses in the adherence between neighboring crystals. The array of sweetener crystals needs to be such that the force applied by teeth during chewing will create fractures between crystals at many points in the confection layer, causing the confection layer to shatter into many small pieces, thus creating an audible and tactile crunchiness. In contrast, a hard glass confection has an amorphous structure in which the sweetener molecules are arranged in an unorganized, unaligned way. A hard glass confection will break if enough force is applied by teeth during chewing, but the layer will not shatter like a crystalline structure.

The processing challenges in creating a brittle confection include the creation of a confection layer, or portion, having a desirable crystal formation pursuant to the manufacturer's requirements. For example, a manufacturer may require the confection be pliable enough to form and package without breakage, and yet be hard and brittle when the consumer chews it so that it has a crunchiness. Moreover, a manufacturer may want to combine the crunchy confection layer with another, maybe, softer layer without detrimentally impacting the confection layer's crunchiness. Accordingly, in order to create the crunchy layer, the confection must include enough sweetener in crystal form to create a crunchy confection when the consumer chews it, yet the process for forming the confection must be such that only a portion of the sweetener crystallizes before the finished product is formed and the rest of the required crystallization occurs after the confection is formed. This would decrease breakage during forming and packaging.

Controlling crystal growth can be done by adding inhibitors, such as flexible materials including, but not limited to fibers and dextrins. Adding different sweetener materials together will also inhibit growth as each material interferes with the other's organization into crystals. Without inhibitors, a supersaturated or molten confection fluid might harden, but as an amorphous glass or as a combination of crystals with amorphous glass material between and around them. All of these structures could supply a hard texture, but not a brittle texture, and so not a crunchiness.

For example, dipping is a method for creating a hard outer layer around a chewy confection center layer. This method is traditionally used to create a smooth, clear, hard amorphous glass outer layer around a center, usually chewy layer. During the dipping process a confection layer is immersed in a fluid mass that is a supersaturated confection solution or a molten confection mass that is all or mostly sweeteners. The act of immersion may be done once or several times until the desired thickness of confection material is accumulated on the center. Drying and/or cooling steps may be alternately integrated during the process with each immersion step. Though this method was originally designed as a means of adding a glass hard confection layer onto a confection center, the process may be used to make a crunchy layer on the confection center if the immersed confection mass does not include crystal growth inhibitors, and the application of confection material induces and/or allows sweetener crystal growth. In general, there is no shear (*i.e.,* addition of energy) or seeding (*i.e.*, addition of dry crystals as nucleating sites) incorporated within this process to induce crystal growth. Without nucleation sites or shear, the dipping method creates a hard and brittle coating if the sweetener in the confection solution or melted mass was a fast, self crystallizing sweeteners, such as erythritol. With the dipping method, no matter how crystallization is induced, there is no way to control crystal growth. With dipping, the coating will become brittle if there is enough of the coating material in crystal form to break between the crystals. Noncrystalline material between crystals can make crystals stick together and reduce breakage between the crystals. All of these process challenges make the dipping process for making hard and brittle, that is crunchy, coatings very time consuming and inconsistent between batches and samples in the same batch. The dipping method for creating outer crunchy confection layers is usually only used in small production shops without capital for pan coating equipment.

Moreover, the dipping process creates a continuous confection layer around a center layer, such that the outer layer completely covers the center layer. The immersion process step is designed to coat the entire outside of the confectionery piece, creating concentric layers with each dip. If the chewy confection layer is only partially immersed in the confection coating material, the thin viscosity of the saturated solution or molten mass will cause the applied material to spread to the remaining area of the chewy confection center layer.

Pan coating is one of the most common processes for creating a hard and brittle, and thus crunchy, confection layer on a chewy confection layer. In contrast to dipping, pan coating may create an outer layer having more consistent crystal size and content throughout a batch, as well as between production batches. In general, the pan coating process involves multiple spray applications of supersaturated confection solution, or molten confection mass containing sweetener, onto chewy confection center layer pieces that are tumbling in a coating pan, i.e., Driam ™, or other tumbling apparatus, with drying pauses between spray applications during which the applied material crystallizes. Applications of confection solution or molten mass continue to be applied to the confection center layer until the preferred amount is applied.

Although, the pan coating process can create an outer confection coating that has a consumer acceptable crunchiness, there are several challenges with pan coating processing. One challenge is the required processing time. A confection coating on a chewy center could require 10 - 100 fluid spray applications, with tumbling and drying between each. Attempts have been made to speed up the pan coating process, with limited success. For example, spraying a more heavily concentrated sweetener solution onto the chewy confection center layers requires greater drying time and/or application of hot blowing air between spray applications to allow the applied material to crystallize. This tends to cause uneven and/or large crystal growth with uncrystallized hardened mass between the crystals, all of which reduces the layer's crunchiness. Another method used to speed up the pan coating process is to apply an amount of crystalline sweetener material (also called dry charge) to the wet surface of the confection after the spray application. Some of the added dry charge material acts as nucleating agent, and some dry charge material increases the concentration of the applied supersaturated solution, both of which encourages crystallization of the applied solution. This may also result in uncontrolled crystal growth, which may cause large crystals to form resulting in increased layer hardness, but decreased layer brittleness, and ultimately decreased crunchiness.

Another attempt to speed up the pan coating process is by using molten sweeteners as the mass sprayed onto chewy confection layers. Although this does reduce the pan coating process time because less time is needed to evaporate water contained in a supersaturated solution, The use of molten sweeteners still requires many spray applications, along with time between each spray addition to allow cooling and crystallization of the applied mass. Also, care must be taken that later applied layers do not re-melt the earlier layers, as that would lead to a slower process and uneven crystallization, leading to a less crunchy outer confection layer. Molten sweeteners also require additional equipment such as heated fluid transfer lines and spray application nozzles to prevent clogging.

In addition to processing time, a second challenge of pan coating is controlling the sweetener crystallization. Slow crystal growth during application of the confection layer will create large crystals. Large crystal formation creates a defect of being gritty, either as a surface texture or when broken into smaller pieces. Smaller crystals will create a smoother texture, but will require more nucleation sites such as from dry charge sweetener powder added during fluid spray application. Coating crystallization can be effected by ingredients included in the supersaturated confection solution or molten confection mass. These inhibitor ingredients often result in a less hard and brittle pan coating. These inhibitor ingredients include, but are not limited to fiber, starch, dextrin, gum arabic, inulin, hydrogenated starch hydrolosate, corn syrup, polyol syrups, other sweeteners, calcium carbonate, talc, and combinations there of.

A third challenge of pan coating includes the limitations on the center pieces that may be used for pan coating. In order to endure the tumbling and heat of pan coating, only certain center piece materials can be used for making centers with the pan coating process. For example, the chewy confection layers must be rigid under panning conditions, thus limiting the types of confection material that can be used as the center layer. Because the chewy confection center layer pieces are tumbled (i.e., moved around in an approximately circular movement in a rotating pan or cylinder) while being sprayed with hot solution or molten mass, the pieces need to have a rigidity at the elevated pan coating temperatures in order to not deform in the process. Moreover, it is undesirable for the center pieces to become sticky during the coating process or they will stick together and create defects called "doubles" or "twins", that is, two pieces stuck together and coated as one misshapen piece.

Although consumers like variety in their confectionary product choices, many consumers like at least some indication of what they will be consuming before they put it in their mouth. Dipping and pan coating processes create an outer confection layer that completely surrounds the confection center layer. With these processes the consumer only sees the color and texture of the outer layer. Additionally, the tumbling process in pan coating smoothes out product corners and edges, creating a limited number of end product shapes. These two processes create only a limited selection of visible forms for consumers to choose from.

Additionally, with both dipping and pan coating, the hard and brittle confection layer, or portion, is produced in conjunction with another layer, such as a chewy confection center. Consumers might want the choice of enjoying a crunchy confection without any other portion, because, for example, additional portions could affect the perceived crunchy texture. Dipping and pan coating could not be used to make such a single crunchy confection.

Therefore, it would be useful to have a process that could deliver a confection layer, or portion, that would be hard and brittle, with a consumer acceptable crunchy texture, with or without an additional layer, or portion. Additionally, it would be useful to have a process that could control sweetener crystal formation such that the final confection product has a consumer acceptable crunchy texture, with or without an additional confection layer, or portion.

Crunchy confectionaries containing crystallized polyols are known, for instance from US 5 362 505, JP 2006 254906, EP 1 757 193, US 2007/048418, US2007/259070, WO2008/114013 and US 4 640 717.

WO2011/026003 describes a process for obtaining a crunchy confection comprising the steps of mixing, melting, cyrstallizing and forming a confection mass. The melting step is carried out in an extruder and the mixing step may also be carried out in an extruder. In contrast to the present invention, the melting step only involves partial melting.

JP 2005 333946 describes a process involving mixing, melting, crystallizing and forming a confection mass. US2008/305231 describes a similar process in which the confection mass comprises erythritol and xylitol. In both cases, none of the mixing, melting and crystallizing steps are carried out in an extruder.

WO2004/10627 describes a process involving melting xylitol in a screw feeder and feeding this into an inline mixer for mixing with xylitol powder. The mixture is discharged from the mixer, which is maintained at a temperature such that crystallisation is "substantially prevented". However, this reference does not disclose the amount of xylitol in crystal form in the crystal mass.

### SUMMERY OF THE INVENTION

A process for making a confection, comprising the steps of:
a) mixing a confection mass containing at least 80 wt. % sweetener;
b) melting the confection mass, such that the melted mass contains no sweetener in crystal form;
c) crystallizing the confection mass, such that at least 60 wt. % of the sweetener in the confection mass is in crystal form; and
d) forming the confection mass; wherein
the melting of the confection mass is at a temperature between 40°C -190°C;
the crystallizing of the confection mass is at a temperature between 50°C - 180°C; and
the mixing, melting, and crystallizing steps are performed in an extruder.

The confection made by the process of the invention may contain one or multiple layers, where at least one layer is crunchy and contains at least 80 wt.% sweetener and at least 60 wt.% of the sweetener is in crystal form. The process of the invention may further comprise a step of conditioning the confection mass after crystallising the confection mass, and then forming the confection mass, before or after finishing the confection mass, and then leaving the crunchy confection mass as a single layer or combining the crunchy confection mass with layers of other confection mass to create a multiple layered confection, which is then formed before or after finishing. Forming consists of, but is not limited to, shaping the confection mass by forcing it through a die plate or other opening, or by forcing it into a shape by an apparatus including, but not limited to, a rotary cutter, Uniplast, drop roller, cutting blades or wires or any combination thereof. Finishing includes, but is not limited to, pressing, scoring, cutting, shaping, embossing, debossing, spraying with liquid, dusting with particulates or powder, or any combination thereof.

### BRIEF DESCRIPTION OF THE FIGURES

Figure 1 is an exemplary process flow diagram for making a confectionary product in accordance with an embodiment of the present invention.
Figure 2 is an exemplary process flow diagram for making a confectionary product by a process in accordance with another embodiment of the present invention.
Figure 3 is an exemplary process flow diagram for the making of a confectionary product by a process in accordance with another embodiment of the present invention.
Figure 4 is an exemplary process flow diagram for the making of a multi-layered confectionary product in accordance with another embodiment of the present invention.
Figure 5 is a perspective view of a confectionary product in accordance with an embodiment of the present invention.
Figure 6 is a perspective view of a confectionary product in accordance with another embodiment of the present invention.

### DETAILED DESCRIPTION OF THE INVENTION

The present invention relates to a unique process for creating a crystallized confectionary product. In particular, the process provides a crystallized product containing at least 80 wt.% sweetener, with at least 60 wt.% of the sweetener in crystal form. The crystallized confectionary product may be consumed individually, or in combination with other confectionary material. For example, the crystallized confectionary product may be combined with other confectionary layers.

The present invention further relates to a unique process for creating a crystallized confectionary product comprising at least one crunchy confection layer and at least one chewy confection layer. More particularly, the present invention relates to a process for forming a confectionary product consisting of the steps of creating at least one confectionary layer containing at least 80 wt.% sweetener, with at least 60 wt.% of the sweetener in crystal form by a crystallization process; creating another confection layer, including but not limited to, a chewy confection; and combining the layers into a confectionary product. Moreover, the confectionary product may further include the step of finishing by a variety of methods including, but not limited to, pressing, scoring, and cutting.

The invention further provides for further finishing the confectionary product, crystallized confection layer alone of in combination with other layers, by such methods including, but not limited to, embossing, debossing, spraying with liquid, and dusting with particulates or powders.

An embodiment of the present invention relates to a process for controlling the crystallization of a sweetener in a confectionary mass. In accordance with an embodiment of the invention, the confectionary mass contains a crystal content such that the mass is fluid and flexible enough to be formed into a desired shape. The confectionary mass will then contain enough crystal content (i.e., further crystallize) to be hard and brittle, and thus crunchy, when the consumer chews the finished product. The confectionary mass contains at least 80 wt.% sweetener and at least 60 wt.% of that sweetener is in crystal form at the time of confectionary product formation. Most preferably, the confectionary mass contains at least 80 wt.% sweetener and at least 70 wt.% of the sweetener in its' crystal form at the time the confectionary product is chewed by the consumer.

The percent crystal content of the sweetener contained in a confection mass can be measured by several different methods including, but not limited to, differential scanning calorimetry (DSC). With DSC, the crystal content is determined by the thermal properties of a sample as it is heated as compared to a completely crystalline or a completely amorphous glass sample of the same amount and type of sweetener. A DSC run with at least some crystal matter will show a distinct, sharp melting temperature and the area under the DSC plot will give the amount of crystal content. In contrast, a totally amorphous sample will give transition curves. DSC could be combined with other techniques to determine the amount of crystal content, including x-ray diffraction and scanning microscopy.

In accordance with an embodiment of the present invention, the sweetener ingredients may include, but are not limited to, sucrose, dextrose, maltose, isomaltulose, polydextrose, galactose, trehalose, tagatose, sorbitol, maltitol, isomalt, erythritol. xylitol, mannitol, or combinations thereof. The confection mass can also include additional ingredients, such as for example, flavors, high intensity sweeteners, sensates, mendicants, and colors.

The invention may further include the step of finishing the confection mass, crystallized confection layer alone of in combination with other layers, by such methods including, but not limited to pressing, scoring, and cutting. The process may further include finishing the confection mass by such methods including, but not limited to embossing, debossing, spraying with liquid, dusting with particulates or powder, and combinations thereof.

As previously discussed, dipping and pan coating processes can create such crystalline (i.e., crystal containing) confectionary coatings, though each method has challenges including difficulty in controlling sweetener crystallization. Also, as previously discussed, how the crystals are formed and the amount of crystals in the confectionary mass is important to creating a hard and brittle confection, that is a crunchy confection. The process challenge is in making the crystalline content that is necessary for creating the crunchy texture.

Crunch is created by a confection being both hard and brittle. Brittle is breakage of the confection piece in many places when force is applied, that is, the piece shatters when chewed. For the greatest brittleness, and so crunchiness, there needs to be many fracture points in a confection piece due to structure weaknesses between sweetener crystals. A confection piece, where sweetener crystals are glued to their neighbors by one of more "glue" materials, will have less weak points to fracture at then a confection piece with no or less "glue". This "glue" could include materials such as, but not limited to, supersaturated sweetener solution, molten sweeteners, fiber, starch, dextrin, gum arabic, inulin, hydrogenated starch hydrolasates, corn syrup, polyol syrups, and combinations thereof,. So, to create a hard and brittle confection, and so a crunchy confection, there needs to be at least a minimum amount of sweetener in crystalline form, and a minimum amount of "glue" material between the sweetener crystals so that there are enough weak points between enough crystals to form a hard and brittle confection that has a consumer acceptable crunchiness.

The process for making such a crystallized confection product may be accomplished by a number of different methods. In accordance with an embodiment of the present invention, the process includes the steps of :
a) mixing a confection mass containing at least 80 wt.% sweetener;
b) melting the confection mass, such that the melted mass contains no sweetner in crystal form;
c) crystallizing the confection mass, such that at least 60 wt.% of the sweetener in the confection mass is in crystal form; and
d) forming the confection mass into a ribbon, sheet, or rope and then into individual pieces; wherein
the melting of the confection mass is at a temperature between 40°C-190°C.; and the crystallizing of the confection mass is at a temperature between 50°C 180°C; and
the mixing, melting, and crystallizing steps are performed in an extruder.

The first process step, mixing, includes mixing confection ingredients together to create a confection mass. Preferably, the confection ingredients are mixed together to form a confection mass of even density without lumps. In one embodiment, the confection ingredients and the resulting confection mass are in powder form. Preferably, the powdered confection mass contains approximately less than 10 wt.% water. In general, water may encourage the development of a supersaturated solution, which may be trapped between crystals later in the process, ultimately resulting in a less brittle finished product. More particularly, the powdered confection mass may include sweeteners, singularly or in combination, as discussed above, as well as additives known in the confection industry.

In accordance with the invention, the process further includes the step of melting the confection mass at a temperature of 40°C-190°C. Accordingly, the powdered confection mass may be melted through the application of shear in an extruder. The term "shear" is herein defined to include the application of energy to the confection mass, such as with mixing using a rotating plate, fin or screw. The melting of the confection mass may be done through the application of mixing and heat in order to melt all of the sweeteners in the confection mass to form a uniform melted confection mass. The application of enough shear may be provided to raise the confection mass temperature above the melting point of the particular sweeteners in the confection mass.

The process further includes the step of crystallizing at least a portion of the melted confection mass. The melted confection mass may be mixed and cooled in such a way that at least 60 wt.%, preferably at least 70 wt.%, of the sweetener in the confection mass converts into crystal form. In accordance with an embodiment, enough shear is provided (i.e., through mixing) to transform a portion of the melted, amorphous, sweetener in the confection mass into crystal form. Accordingly, the confection mass having crystals is firm enough to hold a shape (e.g., ribbon, sheet, or rope) through further processing steps (i.e., forming and finishing), and yet fluid enough to exit the apparatus. Preferably, this process step creates sufficient crystal content in the confection mass, such that the confection mass hardens after exiting the crystallizing apparatus and cooling to room temperature creating a brittle texture.

An additional process step includes conditioning the confection mass after the crystallization step. This processing step allows for preparing the confection mass for exiting the die plate in a consistent, even stream. This process step may contain a heating of the mass above the temperature of the crystallization process.

An additional process step further includes forming the partially crystallized confection mass into a shape. In accordance with an embodiment, the confection mass may be formed by forcing the confection mass through an opening, such as for example, a slit or hole in a die plate. In accordance with a preferred embodiment, when the preferred amount of crystal content is reached in the crystallization step, the confection mass is forced through an opening (e.g., die plate) to form the mass, usually, into a ribbon, sheet, or rope. Moreover, the movement of the confection mass through the opening may result in the creation of more shear, such as provided by the edges of the opening, thus resulting in the conversion of more amorphous sweetener material into its' crystal form. Preferably, the confection mass, after forming, contains at least 80 wt.% sweetener, with at least 60 wt.%, preferably at least 70 wt.%, of the sweetener in crystal form. As previously suggested, most preferably, the amount of crystal content in the confection is such that it will be hard and brittle and crunchy when cooled to room temperature.

In accordance with embodiments of the present invention, the process steps for creating a crystallized confection mass may be achieved through an overall batch, semi-batch, or a continuous process. For example, in one embodiment a batch process may be used wherein the batch of ingredients for the confection, that is, a set weight of confection, may be mixed, melted, crystallized, and passed through some forming means (e.g., a die plate having an opening or an orifice) to form it into a ribbon, sheet, or rope. For example, the mixing, melting, and crystallizing process steps may be accomplished through the use of various methods, such as for example, a kettle with a water jacket and a mixing spindle or blade. Moreover, for example, the forming of the confection mass into a shape (e.g., ribbon, sheet, or rope) may be accomplished by allowing the fluid confection mass to travel out of the bottom of the kettle, through a pipe, and through a die plate. One of the unique challenges of utilizing a batch process method is creating consistent crystal contents due to the difference in the length of time between mixing the first of the batch and the last of the batch flowing out of the kettle, which may result in creating different crystal contents, and ultimately may result in different hardness and brittleness, and thus different crunchiness, of the confection mass at room temperature.

Alternatively, the steps used to create a crystallized confection mass may also be accomplished through the use of a continuous overall process. In a continuous overall process, the confection mass moves (i.e., flows) in one direction through a processing apparatus, such as for example, an extruder. An advantage of using a continuous overall process is that the first material completing the process has encountered the same processing conditions as the last material completing the process. Preferably, this continuous process would be accomplished through the use of an extruder having sections, or areas, designed for mixing, melting, and crystallizing a confection mass, as well as, a die plate having an exit port for forming the confection ribbon, sheet, or rope. Preferably, the extruder is designed so as to have continuous forward flow and adjustable application of shear to the overall system/process. According to one embodiment, adjustable mixing (i.e., adjustable shear) may be provided per section, for example, through the integration of a screw configuration (containing at least one screw) running longitudinally through the extruder from the entrance port and through the mixing, melting, and crystallization sections. One means of creating adjustable shear, through the use of adjustable mixing, is through the use of adjustable screw elements, such that screw elements may be arranged to give high shear (such as provided through the use of more mixing) during melting of the confection mass, and less shear, such as through the use of less mixing, during the crystallizing step, if required. In one preferred embodiment, a twin screw, intermeshing, co-rotating screw arrangement runs longitudinally through the extruder from entrance port and through the mixing, melting and crystallization sections. In a further embodiment, a twin screw, intermeshing, co-rotating screw arrangement runs longitudinally through the extruder to the exit die plate.

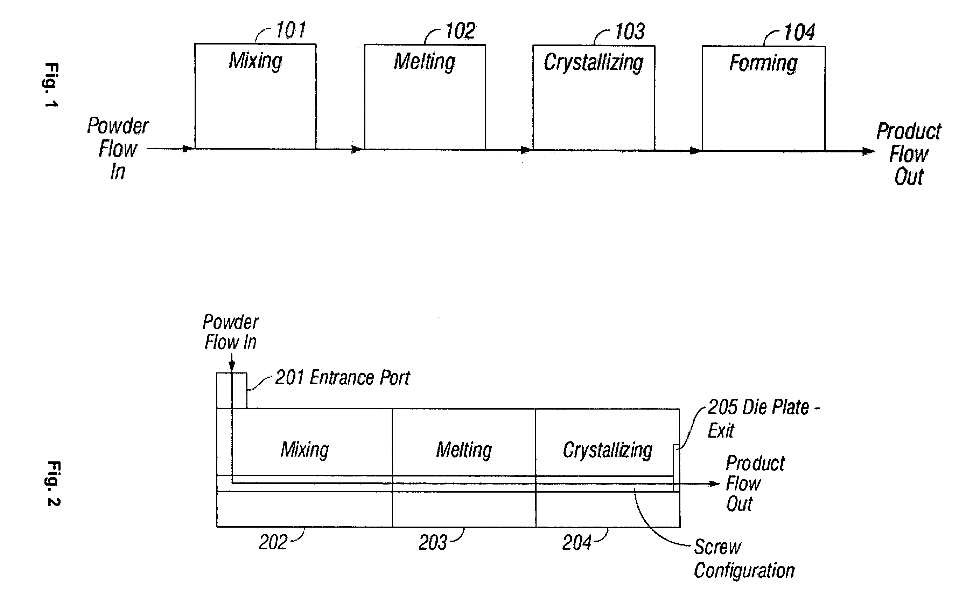

Figure 1 illustrates a flow diagram of an embodiment of the present invention, the process includes the steps of: 1) mixing a confection mass containing at least 80 wt.% sweetener (101); 2) melting the confection mass (102); 3) crystallizing the confection mass, such that at least 60 wt.% of the sweetener in the confection mass is in crystal form (103); and 4) forming the confection mass into a ribbon, sheet, or rope and then into individual pieces (104).

In accordance with this invention, a hard and brittle confection mass is produced by the process by using an extruder. A confection mass in powder form, which preferably includes less than 10 wt.% water and at least 80 wt.% sweetener, is added to an extruder through an entrance port. The extruder comprises a screw configuration along the longitudinal length inside the extruder from the entrance port to the exit die. Preferably, the screw configuration comprises two intermeshed screws designed to mix and convey the confection mass along the length of the extruder, for example from the entrance port to the die plate, as they rotate in the same direction. The entrance port opens into a section of the extruder. In the first section, the confection mass is mixed at approximately 20°C-40°C, preferably at 20°C-27°C. Moreover, the confection mass is preferably mixed until the mass is homogeneous, preferably any lumps have been removed.

The confection mass may be conveyed by the screw configuration to another section of the extruder for the melting process step. In the second section of the extruder, the confection mass is mixed and melted at 40°C-190°C, preferably at 60°C-180°C. The melting temperature is chosen to melt all of the sweetener, in the confection mass. In general, the combination of conditions is provided to include melting.

Once the mass is melted, containing no sweetener in crystal form, the melted mass may then be conveyed by the screw configuration to another section of the extruder for the crystallization step. In the third section of the extruder, the confection mass is mixed and cooled at 50°C-180°C, preferably at 60°C-180°C, and under pressure of approximately 2068-6895 kPa ( 300-1000 psi) to create a confection mass with at least 60 wt.% of the sweetener in the mass in crystal form. In general, pressure may build in this section of the extruder due to the screw element design creating back pressure while conveying the confection mass forward and through a die plate located at the end of the extruder. In general, the application of shear, through the use of mixing and cooling further creates conditions that cause the sweetener to crystallize from the melted state.

Moreover, the screw configuration forces the partially crystallized mass out of the extruder through the die plate in the extruder to form a partially crystallized confection ribbon, sheet, or rope. The confection mass of the ribbon, sheet, or rope contains at least 80 wt. % sweetener, which is at least 60 wt. %, preferably at least 70 wt. %, in crystal form.

Figure 2 illustrates an example of a process to perform an embodiment of the present invention using an apparatus, such as an extruder. This example of the process of this invention includes the steps of: 1) adding the confection mass through an entrance port (201); 2) mixing the confection mass in the first section (202); 3) melting the confection mass in the second section (203); 3) crystallizing the confection mass in the third section (204); and 4) forming the confection mass by exiting through a die plate exit (205). A screw configuration extends from the mixing section through to the die plate exit.

In another embodiment of this invention, a hard and brittle and crunchy confection mass is produced by the process of this invention using another example of apparatus to perform the process of this invention. Initially, the confection mass is provided in powder form, which preferably includes less than 10 wt. % water and at least 80 wt. % sweetener. The confection mass in powder form is added to an extruder through an entrance port. The extruder comprises a screw configuration along the longitudinal length inside the extruder from the entrance port and through the mixing, melting and crystallizing sections. Preferably, the screw configuration comprises two intermeshed screws designed to mix and convey the confection mass along the length of the extruder, for example, from the entrance port and through the mixing, melting, and crystallization sections, as they rotate in the same direction. The entrance port opens into a first section of the extruder. In the first section the confection mass is mixed at approximately 20°C - 40°C, preferably at 20°C - 27°C, preferably until there are no lumps and preferably the mass is homogeneous.

Then the confection mass is conveyed by the screw configuration to the second section of the extruder for the melting process step. In the second section of the extruder, the confection mass is mixed and melted at 40°C-190°C, preferably at 60°C-180°C. The melting temperature is chosen so as to melt all of the sweetener in the confection mass. The mixing preferably creates a homogeneous mass without creating enough shear to create crystal formation.

When the mass is melted, containing no sweetener in crystal form, the melted mass is then conveyed by the screw configuration to the third section of the extruder for the crystallizing step. In the third section of the extruder, the confection mass is mixed and cooled at 50°C-180°C, preferably at 60°C-180°C, under pressure of 2068-6895 kPa (300-1000 psi) to create a confection mass with at least 60 wt.% of the sweetener in the mass in its crystal form. The pressure builds in this section of the extruder by the screw element design creating some back pressure conveying the confection mass towards a fourth section. In the fourth section the confection mass may be conditioned in order to prepare the confection mass to exit the processing apparatus through the die plate. Further, this conditioning process may be done in a housing, separate from the extruder, that contains the fourth section and the die plate (e.g., die head). The conditioning process step prepares the mass for exiting the die plate in a consistent, even confection mass stream. This process step may contain further heating at approximately 80°C-225°C, under pressure of 2068-6895 kPa (300-1000 psi).

Although not shown, additional sections or sub-section may be added within the extruder in order to maintain the optimal conditions for mixing, melting, and crystallizing the confection mass, in accordance with the present invention.

When the partially crystallized mass exits the extruder through the die plate in the extruder, a partially crystallized confection ribbon, sheet, or rope is formed. The confection mass of the ribbon, sheet, or rope contains at least 80 wt. % sweetener, which is at least 60 wt. %, preferably at least 70 wt. %, in crystal form.

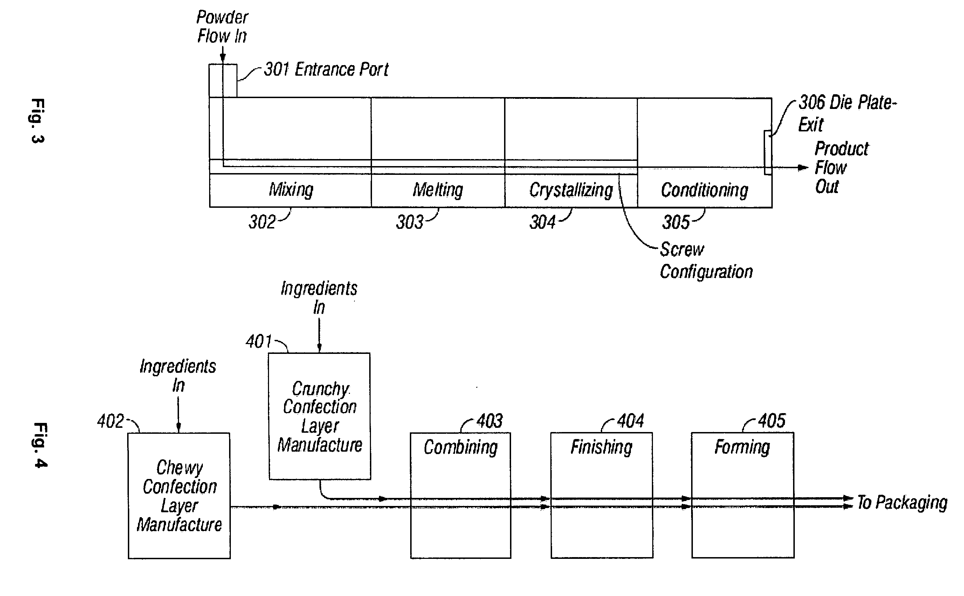

Figure 3 illustrates an example of a process to perform an embodiment of the present invention using an apparatus, such as an extruder. This example of the process of this invention includes the steps of: 1) adding the confection mass through an entrance port (301); 2) mixing the confection mass in a first section (302); 3) melting the confection mass in a second section (303); 3) crystallizing the confection mass in a third section (304); 4) conditioning the confection mass in a fourth section (305); and 5) forming the confection mass by exiting through a die plate exit (306). The conditioning process can be done in a section within the extruder, or separate from the extruder, for example, in a die head. A screw configuration extends from the mixing section through the crystallizing section..

In accordance with further aspects of this invention, the confection mass formed through the die plate into a resulting confection ribbon, sheet, or rope may be further processed in a finishing step before or after formed into individual confection pieces. This finishing step may further include, but is not limited to, pressing, scoring, cutting, embossing, debossing, spraying with liquid, dusting with particulates or powders, or combinations thereof. The temperature of the confection ribbon, sheet, or rope during both the forming and finishing process steps is important because the confection needs to stay flexible enough throughout the forming and finishing steps to avoid unwanted breakage. In order to keep the confection ribbon, sheet, or rope at the desired temperature for forming and/or finishing, the confection mass (post die plate) temperature may be controlled by a number of methods, including but not limited to, running the forming and/or finishing process in a temperature controlled box, or container; heating any conveyor belts; or by any other means of applying heat to the confection mass, such as by blowing hot air or irradiating with infrared lamps.

The finishing process step may further include rollers or wheels that may ultimately press any assembled layers together and/or press a pattern into any single or assembled layers (e.g., embosses), or otherwise marks the confection mass. In order to stabilize the pressed mark, the confection surface may further be chilled during or after pressing. The finishing process step may also include spraying the confection layer surface with a liquid, or some other type of material. The material sprayed may include, but is not limited to, colored or uncolored liquids comprising syrups, molten sweeteners, molten waxes, molten fat, oil, sweeteners, high intensity sweeteners, colors, flavors, sensates and combinations thereof. Moreover, the finishing process step may further include dusting the confection layer surface with a particulate or powder. The material dusted may include, but is not limited to, colored or uncolored particulates or powders comprising waxes, fat, oil, sweeteners, high intensity sweeteners, colors, flavors, sensates and combinations thereof. Further, the particulates may include beads, nut pieces, or fruit pieces.

In a further aspect of this invention, the confection mass can be formed into individual confection pieces before or after the finishing step. This piece forming can be accomplished by any method known to those in the art, including, but not limited to, drop roller, Uniplast, rotary cutter, or knife wheels.

In accordance with another embodiment, the present invention further relates to a process of this invention for forming a multilayered confectionary product, wherein at least one of the layers is a hard and brittle and crunchy layer. This process for making a multilayered confection includes the steps of creating at least one crunchy confectionary layer containing at least 80 wt.% sweetener, with at least 60 wt.% of the sweetener in crystal form by the crystallization process discuss above; creating at least one other confection layer, including, but not limited to, a chewy confection; and combining the at least two layers; and finishing them by such methods as described above, including, but not limited to, pressing, scoring, cutting, embossing, debossing, spraying with liquid, dusting with particulates or powder, or combinations thereof. Moreover, the product may be formed into individual confection pieces before or after finishing.

In order to keep the assembled layered confection at the desired temperature for forming and/or finishing, the assembled layered confection temperature may be controlled by a number of methods, including but not limited to, running the forming and/or finishing process in a temperature controlled box, or container; heating any conveyor belts; or by any other means of applying heat to the confection mass, such as by blowing hot air or irradiating with infrared lamps.

As previously described in relation to the finishing of the crunchy confection mass, the finishing process for the multi-layered confection may include the same processes.

In accordance with the multi-layered confection product described, wherein at least one layer is a chewy layer, the chewy layer may take many different forms and configuration. For example, the chewy confection layer may be, but is not limited to, chewing gum, toffee, caramel, fudge, chocolate, nougat, licorice, fondant, gummy, jelly, or combination thereof. Moreover, the chewy confection can contain, but is not limited to, colors, sweeteners, flavors, sensates, fat, cocoa based ingredients, milk based ingredients, fruit based ingredients, proteins, hydrocolloids, fiber, starch, pectin, gelatin, gum base, emulsifiers, or combinations thereof. The sweetener ingredients can be, but are not limited to, sucrose, dextrose, maltose, isomaltulose, polydextrose, galactose, trehalose, tagatose, sorbitol, maltitol, isomalt, erythritol. xylitol, mannitol, or combinations thereof. The chewy confection may further be made by any process known to those skilled in the confection arts, such as through the use of an extruder, rolled by hand, or various different methods for making confections.

In accordance with an embodiment of the present invention, a finished product having at least one crystalline crunchy confection mass and at least one chewy confection mass may be produced by the process of this invention using various different apparatus in combination with one another. As previously described, each of the layers may be formed by different apparatus. In one particular example an extruder may be used to create at least one a crystallized confection layer in a ribbon, sheet, or rope form; an extruder may be used to create at least one chewy confection layer in a ribbon, sheet, or rope form; a combining apparatus is provided to assemble the ribbons, sheets, or ropes and align them into a layered format; and a finishing system may be used (such as one containing wheels or rollers) for finishing the assembled layers by pressing, scoring and/or cutting them. Optionally, an additional finishing apparatus may be provided (including for example wheels or rollers) for embossing or debossing patterns into the surface of at least one layer. Alternatively, an apparatus may be integrated within the finishing system for spraying liquid or dusting particulates or powder onto at least one layer. A forming apparatus may be further provided for forming individual confection pieces, such as, but not limited to a rotary cutter, Uniplast, drop roller, or cutting blades or wires.

Figure 4 illustrates an example of a process to perform an embodiment of the present invention. This example of the process of this invention includes the steps of: 1) creating at least one hard and brittle and crunchy confection layer (401); 2) creating at least one other confection layer (402); 3) combining the at least one hard and brittle and crunchy layer and at least one other confection layer (403); 4) finishing the confection mass containing at least two layers by methods including, but not limited to, pressing, scoring, cutting, embossing, debossing, spraying with liquid, dusting with particulates or powder, or combinations thereof (404); and forming the confection mass into individual pieces using an apparatus, including but not limited to, a rotary cutter, Uniplast, drop roller, or cutting blades or wires (405).

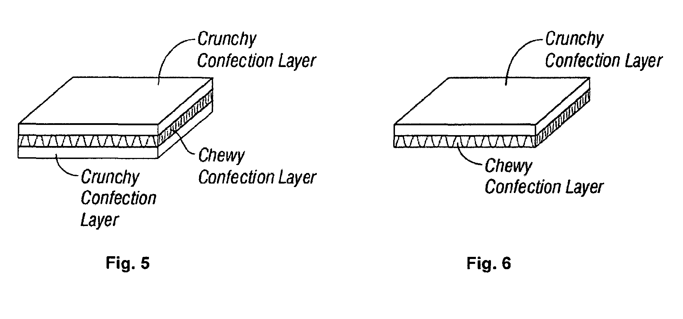

Figures 5 and 6 illustrate embodiments of the product of the present invention. In particular, Figure 5 illustrates a product of this invention containing three layers in a sandwich format, for example, two outer crunchy confection layers and a center chewy layer. Figure 6 illustrates a product of this invention containing two layers in a laminated format, for example, one crunchy confection layer and one chewy confection layer. Alternate configurations of the product are considered within the scope of the present invention, including alternate shapes, multiple layered products having various orientations of layers, and multi-layered products including the finishing effects described above,

As previously described, it is desirable to maintain optimal processing conditions such that the crystalline crunchy confection layer and the chewy confection layer do not cool to the point where they will not stick to each other. Moreover, if the crystalline crunchy confection layer cools to room temperature, it may become too rigid and brittle to finish or package. Various temperature regulating methods may be used as described above, such as for example, using a temperature controlled box, or container; or by applying heat through various means described. Process conditions should be maintained such that the crystalline crunchy confection layer stays flexible through packaging. The crystalline crunchy confection layer will, though, become hard and brittle after packaging so that the consumer perceives it as crunchy when chewed.

### EXAMPLES

Confectionary samples were produced with two crunchy confection layers made by the extrusion crystallization process and one chewing gum layer. The resulting confection layers were crunchy in less than 1 hour after the confection mass left the extruder.

The gum portion of the confectionary samples formula is given in Table 1.
All components are wt. % dry solids.

**Table 1: Chewing Gum Formula**

| | | wt.% |
|---|---|---|
| Gum Base | | 31.0 |
| Sorbitol Sweetener | | 55.4 |
| Maltitol Syrup | | 11.0 |
| Flavor,Coolants,Color | | 2.6 |
| High Intensity Sweeteners | | 1.0 |
| Total | | 100.0 |

The chewing gum layer (i.e., chewy confection layer) was made by standard chewing gum process. The gum base was added to a mixer and then the remaining materials were added to the mixer. The mass was mixed until homogeneous. The mass was then added to a standard twin screw gum extruder and extruded into a ribbon.

The crunchy confection layer formulas are given in Table 2. All components are wt. % dry solids. No water was added to the confection portion. The confection mass was added to the extruder as a powder containing less than 10 wt.% water.

**Table 2: Confection Portion Formula**

| Example # | 1 | 2 | 3 | 4 | 5 | 6 | 7 | 8 |
|---|---|---|---|---|---|---|---|---|
| Sweetener | | | | | | | | |
| Isomalt | 99.0 | | | | | | | |
| Orbital | | 99.0 | | | | | | |
| Maltitol | | | 99.0 | | | | | |
| Xylitol | | | | 99.0 | | | | |
| Erythritol + Isomalt | | | | | 99.0 | | | |
| Erythritol + Polydextrose | | | | | | 99.0 | | |
| Mannitol + Polydextrose | | | | | | | 99.0 | |
| Sucrose | | | | | | | | 99.0 |
| Color, Flavor, HIS | 1.0 | 1.0 | 1.0 | 1.0 | 1.0 | 1.0 | 1.0 | 1.0 |

The confection mass of examples 1 - 8 were processed by premixing the confection and additional ingredients (such as color, flavor and/or high intensity confections (HIS)) and then adding the premixed confection mass into the gravimetric blender attached to an extruder that comprises two intermeshed screws along the longitudinal length of the extruder chamber from the entrance port to a die. The screws designed to mix and convey confection mass as they rotate in opposing directions (Coperion ZSK-25). The feeder fed the confection mass powder into the first section of the extruder where it was further mixed. The mixed confection mass was then conveyed to the second section of the extruder, where the confection mass was mixed and melted. The melted confection mass was then conveyed to the third section of the extruder wherein the confection mass was cooled and mixed in such a way as to create crystal growth. In some examples, the confection mass was then conveyed to a fourth section of the extruder, where the confection mass was then conditioned. Where there was no fourth section, the confection mass was conveyed from the third section through the die plate and out of the extruder. Where there was a fourth section, the confection mass was conveyed from the fourth section through the die plate and out of the extruder. In all examples, the crunchy confection layers were assembled with a chewing gum layer (i.e., chewy confection layer). In all examples, the crunchy confection layers were crunchy in less than one hour after the partially crystallized confection mass left the extruder.

Table 3 further provides specific conditions used to make different batches of the crunchy confection layers as set forth in Table 2. Confection mass ribbons made under these conditions were fluid enough to exit the die plate, and yet firm enough to maintain a ribbon form. The confection mass ribbons further became hard and brittle, and so crunchy, when they reached room temperature. Temperature ranges within Table 3 further include ramping up and/or ramping down temperatures. For example, in the event the melting section of the extruder had additional sub-sections, the sub-sections may have further increases in temperature as the confection mass moved through the melting section. Depending on the design of the system, the back pressure created within the system was sometimes measured at the end (near the die) of the system, or alternatively, sometimes in a place about the middle of the third section of the extruder.

**Table 3: Extrusion Crystallization Temperature and Pressure Conditions (Broadest)**

| Example # | 1 | 2 | 3 | 4 | 5 | 6 | 7 | 8 | |
|---|---|---|---|---|---|---|---|---|---|
| Confection | Iso malt | Sorbitol | Maltitol | Xylitol | Erythritol + Isomalt | Erythritol + Polydextrose | Mannitol + Polydextrose | Sucrose | Range to Cover All Confections |
| First Section Temp. MIXING | 22 | 22 | 22 | 22 | 22 | 22 | 22 | 20 | 22°C |
| Second Section Temp. MELTING | 60-180 | 60-100 | 60-170 | 60-100 | 60-160 | 90 - 130 | 80-170 | 170 | 60 - 180°C |
| Third Section Temp. CRYSTAL LIZATION | 100 103 | 80-95 | 60-130 | 60-65 | 110 - 90 | 120-70 | 130-100 | 170 | 60 - 170°C |
| Fourth Section and/or Die Plates Temp. CONDITI ONING | 135 - 150 | 95-103 | 130-150 | 90-105 | 115-118 | only die plate | only die plate | 190 | 90 - 190°C |
| Pressure in Third Section (at midpoint) | 300 - 900 | 350 | 950 | 350 | 500 | NA | NA | NA | 300-950psi |
| Pressure in Third Section (at end) | 600 | 350 -400 | 350-950 | 300-350 | NA | NA | NA | 600 | 300-950psi |

| | | | | | | | | | |
|---|---|---|---|---|---|---|---|---|---|
| Temperatures in °C. Pressure in psi. | | | | | | | | | |

Examples 1 through 8 produced crunchy confection mass layers that were flexible and fluid enough to exit the extruder through the slit opening in the die plate in order to be further processed without breaking or cracking. These examples became crunchy within 1 hour after they left the extruder.

Examples 1 through 8 can be used to make confectionary products with at least one crunchy confection layer of formulas 1 - 8 and at least one chewy confection layer made with a chewy material selected from the group consisting of chewing gum, toffee, caramel, fudge, chocolate, nougat, licorice, fondant, jelly, gummy, or combination thereof. After at least one crunchy confection layer is assembled with at least one chewy confection layer in an assembled parallel stack format in an assembly unit, the assembled stack of layers is then finished in the finishing unit, including pressing, marking, scoring, spraying with liquid, dusting with particulates or powder, or combinations thereof. The assembled stack of layers is passed through the piece forming unit to form individual pieces, before or after the finishing unit.

Table 4 provides the processing conditions for a crunchy confection mass sample (Example 9) that contained about 99 wt. % isomalt.

**Table 4**

| | TWIN SCREW EXTRUDER (T, °C) | | | | | | | | | | DIE HEAD (T, °C) | | |
|---|---|---|---|---|---|---|---|---|---|---|---|---|---|
| | B 1 | B 2 | B3 | B4 | B5 | B6 | B7 | B8 | B9 | B1 0 | B1 1 | B1 2 | B1 3 |
| ISOMALT | 22 | 40 | 150 | 145 | 110 | 110 | 105 | 105 | 105 | 105 | 130 | 223 | 135 |

The above isomalt example (Example 9) was processed on a four section process as represented in Figure 3. B1 was the mixing section of the extruder. B2 - B4 was the melting section of the extruder. B5 - B10 was the crystallizing section of the extruder. B11 - B13 was the conditioning section, which in this example was located in the die head (i.e. process section after the extruder and before the die plate).The pressure in B10 was 670 psi. The % amount of the confection mass in crystal form was 71.75% according to DSC data run on the sample less than one hour after sample exited the die plate.

Table 5 gives the processing conditions for a crunchy confection mass sample (Example 10) that contained about 99 wt. % sorbitol.

**Table 5**

| | TWIN SCREW EXTRUDER (T, °C) | | | | | | | | | | DIE HEAD (T, °C) | | |
|---|---|---|---|---|---|---|---|---|---|---|---|---|---|
| | B1 | B2 | B3 | B4 | B5 | B6 | B7 | B8 | B9 | B10 | B11 | B12 | B13 |
| SORBITOL | 22 | 40 | 100 | 100 | 80 | 80 | 80 | 80 | 75 | 75 | 95 | 95 | 105 |

The above sorbitol example (Example 5) was processed on a four section process as represented in Figure 3. B1 was the mixing section of the extruder. B2 - B4 was the melting section of the extruder. B5 - B10 was the crystallizing section of the extruder. B11 - B13 was the conditioning section, which in this example was located in the die head (i.e. process section after the extruder and before the die plate).The pressure in B10 was 670 psi. The % amount of the confection mass in crystal form was 87.40 wt.% according to DSC data run on the sample less than one hour after sample exited the die plate.

The compositions and methods of the present invention are capable of being incorporated in the form of a variety of embodiments, only a few of which have been illustrated and described above. The invention may be embodied in other forms without departing from its spirit or essential characteristics. The described embodiments are to be considered in all respects only as illustrative and not restrictive, and the scope of the invention, therefore, is indicated by the appended claims rather than by the foregoing description. All changes which come within the meaning and range of equivalency of the claims are to be embraced within their scope.

## Claims

1. A process for making a confection, comprising the steps of:
a) mixing a confection mass containing at least 80 wt. % sweetener;
b) melting the confection mass, such that the melted mass contains no sweetener in crystal form;
c) crystallizing the confection mass, such that at least 60 wt. % of the sweetener in the confection mass is in crystal form; and
d) forming the confection mass,
wherein
the melting of the confection mass is at a temperature between 40°C -190°C; the crystallizing of the confection mass is at a temperature between 50°C - 180°C; and
the mixing, melting, and crystallizing steps are performed in an extruder.

2. A process for making a confection of claim 1, wherein the formed confection is crunchy at 20 °C - 27 °C.

3. A process for making a confection of claim 1 or 2, wherein the forming of the confection mass includes passing the confection mass through a die plate slit, die plate hole, or other opening to create a ribbon, sheet, or rope of confection mass.

4. A process for making a confection of any of the previous claims, wherein the forming of the confection mass includes forming of the confection mass into individual pieces.

5. A process for making a confection of any of the previous claims, further comprising the step of finishing.

6. A process for making a confection of any of the above claims, wherein the finishing is selected from the group consisting of embossing, debossing, spraying with liquid, dusting with particulates or powder, pressing, scoring, cutting, forming, shaping, and any combination thereof.

7. A process for making a confection of any one of the previous claims, wherein the confection mass contains at least 90 wt. % sweetener.

8. A process for making a confection of any one of the previous claims, wherein at least 70 wt. % of the sweetener is in crystal form.

9. A process for making a confection of any one of the previous claims, wherein the mixing of the confection mass is at a temperature between 20°C - 40°C.

10. The process of claim 9, wherein the mixing of the confection mass is at a temperature between 20°C-27°C.

11. A process of any of the previous claims, wherein the conditioning of the confection mass is done at 80°C - 225 °C.

12. A process of any of the previous claims, wherein the crystallizing of the confection mass is at a pressure between 300 - 1000 psi (2068 - 6895 kPa).

13. A process of any of the previous claims, further comprising the step of conditioning.

14. A process of claim 13, wherein conditioning step is performed in an extruder.

15. A process of any of the previous claims, wherein the extruder comprises a screw configuration extending through the extruder that mixes and conveys the confection mass through the extruder.

16. A process of claim 15, wherein the screw configuration comprises two intermeshed screws designed to mix and convey the confection mass from an entrance port of the extruder to an exit die plate of the extruder as the two screws rotate in the same direction.

17. A process of claim 16, wherein the screw configuration comprises two intermeshed screws designed to mix and convey the confection mass from an entrance port, through the mixing step, the melting step, and the crystallizing step of the extruder as the two screws rotate in the same direction.

18. A process of any preceding claim for making a multilayered confection, comprising the steps of:
a) performing the steps of any preceding claim whereby to create at least one crunchy confection layer containing at least 80 wt. % sweetener, with at least 60 wt. % of the sweetener in crystal form;
b) creating at least one other confection layer, wherein the confection layer is a chewy layer; and
c) combining the at least one crunchy confection layer and the at least one other layer

19. A process for making a multilayered confection of claim 18, further comprising the step of finishing the combined confection by at least one process selected from the group consisting of embossing, debossing, spraying with liquid, dusting with particulates or powder, pressing, scoring, cutting, forming, shaping, and any combination thereof.

## Patentansprüche

1. Verfahren zur Herstellung von Konfekt, das die folgenden Schritte umfasst:
a) Mischen einer Konfektmasse, die mindestens 80 %-Gew. Süßstoff enthält;
b) Schmelzen der Konfektmasse derart, dass die geschmolzene Masse keinen Süßstoff in Kristallform enthält;
c) Kristallisieren der Konfektmasse derart, dass mindestens 60 %-Gew. des Süßstoffs der Konfektmasse in Kristallform vorliegen; und
d) Formen der Konfektmasse,
wobei
das Schmelzen der Konfektmasse bei einer Temperatur zwischen 40 °C - 190 °C erfolgt;
das Kristallisieren der Konfektmasse bei einer Temperatur zwischen 50 °C - 180 °C erfolgt; und
die Schritte zum Mischen, Schmelzen und Kristallisieren in einer Strangpresse durchgeführt werden.

2. Verfahren zur Herstellung von Konfekt nach Anspruch 1, wobei das geformte Konfekt bei 20 °C - 27 °C knusprig ist.

3. Verfahren zur Herstellung von Konfekt nach Anspruch 1 oder 2, wobei das Formen der Konfektmasse das Durchleiten der Konfektmasse durch einen Matrizenplattenschlitz, ein Matrizenplattenloch oder eine andere Öffnung beinhaltet, um ein Band, eine Platte oder einen Strang aus Konfektmasse zu erzeugen.

4. Verfahren zur Herstellung von Konfekt nach einem der vorhergehenden Ansprüche, wobei das Formen der Konfektmasse das Formen der Konfektmasse in einzelne Stücke umfasst.

5. Verfahren zur Herstellung von Konfekt nach einem der vorhergehenden Ansprüche, das ferner den Schritt zur Veredelung umfasst.

6. Verfahren zur Herstellung von Konfekt nach einem der obigen Ansprüche, wobei die Veredelung ausgewählt ist aus der Gruppe bestehend aus Hochprägen, Tiefprägen, mit Flüssigkeit besprühen, mit Partikeln oder Pulver bestäuben, Pressen, Ritzen, Schneiden, Formen, Modellieren und jeder Kombination davon.

7. Verfahren zur Herstellung von Konfekt nach einem der vorhergehenden Ansprüche, wobei die Konfektmasse mindestens 90 %-Gew. Süßstoff enthält.

8. Verfahren zur Herstellung von Konfekt nach einem der vorhergehenden Ansprüche, wobei mindestens 70 %-Gew. die Süßstoffe in Kristallform vorliegen.

9. Verfahren zur Herstellung von Konfekt nach einem der vorhergehenden Ansprüche, wobei das Mischen der Konfektmasse bei einer Temperatur zwischen 20 °C - 40 °C erfolgt.

10. Verfahren nach Anspruch 9, wobei das Mischen der Konfektmasse bei einer Temperatur zwischen 20 °C - 27 °C erfolgt.

11. Verfahren nach einem der vorhergehenden Ansprüche, wobei die Aufbereitung der Konfektmasse bei 80 °C bis 225 °C erfolgt.

12. Verfahren nach einem der vorhergehenden Ansprüche, wobei die Kristallisierung der Konfektmasse bei einem Druck zwischen 300 - 1000 psi (2068 - 6895 kPa) erfolgt.

13. Verfahren nach einem der vorhergehenden Ansprüche, das ferner den Schritt zur Aufbereitung umfasst.

14. Verfahren nach Anspruch 13, wobei der Aufbereitungsschritt in einer Strangpresse durchgeführt wird.

15. Verfahren nach einem der vorhergehenden Ansprüche, wobei die Strangpresse eine Schneckenkonfiguration umfasst, die sich durch die Strangpresse erstreckt, die die Konfektmasse mischt und durch die Strangpresse transportiert.

16. Verfahren nach Anspruch 15, wobei die Schneckenkonfiguration zwei dicht kämmende Schnecken umfasst, die konzipiert sind, um die Konfektmasse zu mischen und von einer Eingangsöffnung der Strangpresse zu einer Ausgangsmatrizenplatte der Strangpresse zu transportieren, wenn sich die beiden Schnecken in gleicher Richtung drehen.

17. Verfahren nach Anspruch 16, wobei die Schneckenkonfiguration zwei dicht kämmende Schnecken umfasst, die konzipiert sind, um die Konfektmasse zu mischen und von einer Eingangsöffnung durch den Schritt zum Mischen, den Schritt zum Schmelzen und den Schritt zum Kristallisieren der Strangpresse zu transportieren, wenn sich die beiden Schnecken in gleicher Richtung drehen.

18. Verfahren nach einem der vorhergehenden Ansprüche zur Herstellung eines mehrschichtigen Konfekts, das die folgenden Schritte umfasst:
a) Durchführen der Schritte nach einem der vorhergehenden Ansprüche, um dadurch mindestens eine knusprige Konfektschicht zu erzeugen, die mindestens 80 %-Gew. Süßstoff enthält, wobei mindestens 60 %-Gew. des Süßstoffs in Kristallform vorliegen;
b) Erzeugen mindestens einer anderen Konfektschicht, wobei die Konfektschicht eine kaugummiartige Schicht ist; und
c) Kombinieren der mindestens einen knusprigen Konfektschicht und der mindestens einen anderen Schicht.

19. Verfahren zur Herstellung von mehrschichtigem Konfekt nach Anspruch 18, das ferner den Schritt zur Veredelung des kombinierten Konfekts durch mindestens ein Verfahren, ausgewählt aus der Gruppe bestehend aus Hochprägen, Tiefprägen, mit Flüssigkeit besprühen, mit Partikeln oder Pulver bestäuben, Pressen, Ritzen, Schneiden, Formen, Modellieren und jeder Kombination davon umfasst.

## Revendications

1. Procédé de fabrication d'une confiserie, comprenant les étapes suivantes :
a) mélange d'une masse de confiserie contenant au moins 80 % en poids d'édulcorant ;
b) fusion de la masse de confiserie, de manière à ce que la masse fondue ne contienne pas d'édulcorant sous forme cristallisée ;
c) cristallisation de la masse de confiserie, de manière à ce qu'au moins 60 % en poids de l'édulcorant de la masse de confiserie soient sous forme cristallisée ; et
d) formation de la masse de confiserie,
dans lequel
la fusion de la masse de confiserie se fait à une température située entre 40°C et 190°C;
la cristallisation de la masse de confiserie se fait à une température située entre 50°C et 180°C; et
les étapes de mélange, de fusion et de cristallisation sont réalisées dans une extrudeuse.

2. Procédé de fabrication d'une confiserie selon la revendication 1, dans lequel la confiserie formée est croquante à 20°C - 27 °C.

3. Procédé de fabrication d'une confiserie selon la revendication 1 ou 2, dans lequel la formation de la masse de confiserie inclut le passage de la masse de confiserie à travers une fente de plaque filière, un trou de plaque filière ou autre ouverture pour créer un ruban, une feuille ou une corde de masse de confiserie.

4. Procédé de fabrication d'une confiserie selon l'une quelconque des revendications précédentes, dans lequel la formation de la masse de confiserie inclut la formation de la masse de confiserie en morceaux individuels.

5. Procédé de fabrication d'une confiserie selon l'une quelconque des revendications précédentes, comprenant en outre l'étape de finissage.

6. Procédé de fabrication d'une confiserie selon l'une quelconque des revendications précédentes, dans lequel le finissage est choisi dans le groupe constitué du gaufrage, du gaufrage en creux, de la pulvérisation d'un liquide, de l'application de particules ou de poudre, du pressage, du rainurage, de la coupe, du formage, du façonnage et de toute combinaison de ceux-ci.

7. Procédé de fabrication d'une confiserie selon l'une quelconque des revendications précédentes, dans lequel la masse de confiserie contient au moins 90 % en poids d'édulcorant.

8. Procédé de fabrication d'une confiserie selon l'une quelconque des revendications précédentes, dans lequel au moins 70 % en poids de l'édulcorant sont sous forme cristallisée.

9. Procédé de fabrication d'une confiserie selon l'une quelconque des revendications précédentes, dans lequel le mélange de la masse de confiserie se fait à une température située entre 20°C et 40 °C.

10. Procédé selon la revendication 9, dans lequel le mélange de la masse de confiserie se fait à une température située entre 20°C et 27 °C.

11. Procédé selon l'une quelconque des revendications précédentes, dans lequel le conditionnement de la masse de confiserie est effectué à 80°C - 225°C.

12. Procédé selon l'une quelconque des revendications précédentes, dans lequel la cristallisation de la masse de confiserie se fait à une pression située entre 300 et 1 000 psi (2068 - 6895 kPa).

13. Procédé selon l'une quelconque des revendications précédentes, comprenant en outre l'étape de conditionnement.

14. Procédé selon la revendication 13, dans lequel l'étape de conditionnement est réalisée dans une extrudeuse.

15. Procédé selon l'une quelconque des revendications précédentes, dans lequel l'extrudeuse comprend une configuration à vis s'étendant à travers l'extrudeuse qui mélange et transporte la masse de confiserie à travers l'extrudeuse.

16. Procédé selon la revendication 15, dans lequel la configuration à vis comprend deux vis engrenantes conçues pour mélanger et transporter la masse de confiserie depuis un orifice d'entrée de l'extrudeuse vers une plaque filière de sortie de l'extrudeuse lorsque les deux vis tournent dans la même direction.

17. Procédé selon la revendication 16, dans lequel la configuration à vis comprend deux vis engrenantes conçues pour mélanger et transporter la masse de confiserie à partir d'un orifice d'entrée, lors de l'étape de mélange, l'étape de fusion et l'étape de cristallisation de l'extrudeuse lorsque les deux vis tournent dans la même direction.

18. Procédé selon l'une quelconque des revendications précédentes pour préparer une confiserie multicouche, comprenant les étapes suivantes :
a) réalisation des étapes de l'une quelconque des revendications précédentes pour ainsi créer au moins une couche de confiserie croquante contenant au moins 80 % en poids d'édulcorant, avec au moins 60 % en poids de l'édulcorant sous forme cristallisée ;
b) création d'au moins une autre couche de confiserie, la couche de confiserie étant une couche moelleuse ; et
c) combinaison de l'au moins une couche de confiserie croquante et de l'au moins une autre couche.

19. Procédé de fabrication d'une confiserie multicouche selon la revendication 18, comprenant en outre l'étape de finissage de la confiserie combinée par au moins un procédé choisi dans le groupe constitué du gaufrage, du gaufrage en creux, de la pulvérisation d'un liquide, de l'application de particules ou de poudre, du pressage, du rainurage, de la coupe, du formage, du façonnage et de toute combinaison de ceux-ci.
